# EUROPÄISCHE PATENTSCHRIFT

(11) **EP 0 769 112 B1**
(45) Veröffentlichungstag und Bekanntmachung des Hinweises auf die Patenterteilung: **19.08.1998**
(21) Anmeldenummer: 93917415.7
(22) Anmeldetag: 29.01.1993
(51) Int. Cl.: F16K 17/168, F16K 31/60

(54) **VENTIL, INSBESONDERE SICHERHEITSVENTIL**
VALVE, IN PARTICULAR SAFETY VALVE
SOUPAPE, EN PARTICULIER SOUPAPE DE SURETE

(30) Priorität: 27.02.1992 DE 4206125
(43) Veröffentlichungstag der Anmeldung: 23.04.1997
(73) Patentinhaber: Babcock Sempell Aktiengesellschaft, 41352 Korschenbroich (DE)
(72) Erfinder: BOCKAU, Gerhard, D-4050 Mönchengladbach 5 (DE); DÖRNER, Erhard, D-4050 Mönchengladbach 2 (DE)
(74) Vertreter: Ostertag, Reinhard
(86) Internationale Anmeldenummer: EP9300204
(87) Internationale Veröffentlichungsnummer: WO9317264

(56) Entgegenhaltungen:
- DE-A- 2 600 678
- DE-A- 2 928 502
- DE-A- 3 018 180
- GB-A- 1 258 318
- GB-A- 2 118 275
- US-A- 2 792 015
- US-A- 4 799 506

## Beschreibung

Die Erfindung betrifft ein Ventil, insbesondere ein Sicherheitsventil gemäß den Oberbegriff des Anspruches 1.

Ein derartiges Ventil ist in der DE-A1-26 00 678 beschrieben.

Bei derartigen Ventilen nimmt das Verschlußteil unter der Einwirkung der Ventilfeder eine erste Arbeitsstellung ein, bei einem Sicherheitsventil-typischer Weise die Schließstellung. Das Ventil hält diese normale Arbeitsstellung unter Betriebsbedingungen über sehr lange Zeit hinweg, und um das Ventil gängig zu halten und seine Funktion regelmäßig prüfen zu können, ist eine in Abständen von Hand bedienbare Betätigungseinrichtung vorgesehen, um das Verschlußteil kurzfristig aus der normalerweise eingenommenen ersten Arbeitsstellung herauszubewegen.

Bei dem Ventil nach der DE-A1-26 00 678 ist der Betätigungshebel an einem auf das Ventilgehäuse aufgesetzten Käfigteil angelenkt, dessen oberes Ende zugleich eine Führung für das Betätigungsteil vorgibt. Die verschiedenen Teile der Betätigungseinrichtung sind somit nach außen offen und Umwelteinflüssen ausgesetzt.

In der DE-A1-29 28 502 ist ein ähnliches Ventil beschrieben, bei welchem die verschiedenen Teile der manuellen Betätigungseinrichtung in einem auf das Ventilgehäuse aufgesetzten Einrichtungsgehäuse gekapselt sind, wodurch sie gegen Umwelteinflüsse geschützt sind.

Bei einem solchen Ventil mit gekapselter manueller Betätigungseinrichtung kann es dazu kommen, daß der Betätigungshebel über das vom Ende der Ventilspindel getragene Betätigungsteil zu liegen kommt, und in diesem Falle behindert dann der Betätigungshebel ein Bewegen des Verschlußteiles in die zweite Arbeitsstellung. Da bei solchen bekannten Ventilen bei der Montage nur ein schlechter Sichtkontakt ins Innere der Betätigungseinrichtung besteht, ist nicht gewährleistet, daß eine derartige fehlerhafte Montage mit Sicherheit erkannt wird. Eine Fehlfunktion des Ventiles kann aber unter Betriebsbedingungen zu ganz erheblichen Schäden führen, zum Beispiel bei einem Sicherheitsventil zu einem Leitungsbruch.

Durch die vorliegende Erfindung soll daher ein Ventil gemäß den Oberbegriff des Anspruches 1 so weitergebildet werden, daß ein falscher Zusammenbau der von Hand bedienbaren Betätigungseinrichtung zwangsweise ausgeschlossen ist.

Diese Aufgabe ist erfindungsgemäß gelöst durch ein Ventil gemäß Anspruch 1.

Bei dem erfindungsgemäßen Ventil ist das Spiel zwischen dem auf der Ventil spindel angeordneten Betätigungsteil und der Kammer des Gehäuses der Betätigungseinrichtung, in welcher es läuft, so klein, daß der Betätigungshebel nur auf der einen, gewünschten Seite des Betätigungsteils liegen kann. Jede andere Lage des Betätigungshebels führt dazu, daß die Betätigungseinrichtung überhaupt nicht zusammengebaut werden kann.

Vorteilhafte Weiterbildungen der Erfindung sind in Unteransprüchen angegeben.

Mit der Weiterbildung der Erfindung gemäß Anspruch 2 wird erreicht, daß auf die Ventilspindel keine Biegemomente ausgeübt werden.

Bei einem Ventil gemäß Anspruch 3 werden auf die Ventilspindel auch keine Querkräfte ausgeübt. Diese kann sich geschützt durch die Gewindehülse völlig unbehindert bewegen. Man erhält so ferner einen besonders kompakten Aufbau des Gehäuses der Betätigungseinrichtung.

Mit der Weiterbildung der Erfindung gemäß Anspruch 4 wird erreicht, daß ein vorgegebenes Spiel zwischen dem Betätigungsarm und dem Betätigungsteil einfach und bleibend eingestellt werden kann.

Bei einem Ventil gemäß Anspruch 5 hat man auf einfache Weise einen Ausgleich für Fertigungstoleranzen und vermeidet bei nicht bedienter Betätigungseinrichtung dauernd auf das Betätigungsteil einwirkende Kräfte.

Mit der Weiterbildung der Erfindung gemäß Anspruch 6 werden Biegemomente auf die Betätigungswelle vermieden.

Bei einem Ventil gemäß Anspruch 7 hat man auch einen Kraftausgleich für die Betätigungswelle.

Die Weiterbildung der Erfindung gemäß Anspruch 8 ist im Hinblick auf kleine Reibung beim Bewegen der Betätigungswelle und im Hinblick auf geringe Verformung der Dichtungen von Vorteil.

Bei einem Ventil gemäß Anspruch 9 oder 10 ist es möglich, durch bloßes Umsetzen des Deckels das Ventilverschlußteil in seiner ersten Arbeitsstellung zwangsläufig zu arretieren.

Bei einem Ventil gemäß Anspruch 11 ist auf einfache Weise gewährleistet, daß die Arretierung des Ventilverschlußteiles in seiner ersten Arbeitsstellung optisch deutlich in Erscheinung tritt. Die entsprechende Markierung ist auch nach langem Einsatz gut erkennbar und kann an schlecht zugänglichen Stellen auch taktil zuverlässig ermittelt werden. Auch kann man mit der Markierungskontur einen Stellungsgeber zusammenarbeiten lassen, und so die Blockierung des Verschlußteiles an eine zentrale Steuerwarte weiter melden.

Nachstehend wird die Erfindung anhand eines Ausführungsbeispieles unter Bezugnahme auf die Zeichnung näher erläutert. In dieser zeigen:
- Figur 1:: einen Längsschnitt durch ein Sicherheitsventil mit einer von Hand bedienbaren Anlüfteinrichtung; und

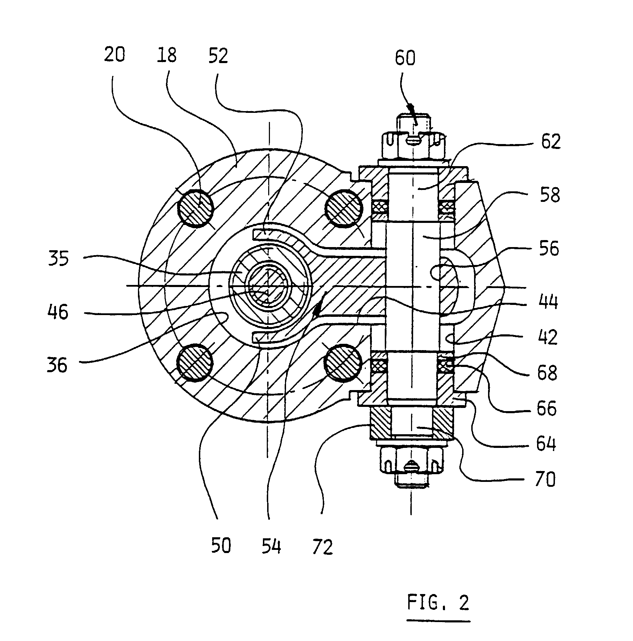

- Figur 2:: einen transversalen Schnitt durch die Anlüfteinrichtung des Sicherheitsventils nach Figur 1 längs der dortigen Schnittlinie II-II in vergrößertem Maßstabe.

Das in der Zeichnung wiedergegebene Sicherheitsventil hat ein mehrteiliges Ventilgehäuse bestehend aus einem Gehäusehauptteil 10, welches ein Ventilsitz 12 trägt, einem auf das Gehäusehauptteil 10 aufgeschraubten Federgehäuse 14 sowie einem geteilten Anlüftgehäuse 16, welches seinerseits aus einem Gehäusegrundkörper 18 und einem hiermit durch Schrauben 20 verbundenen Deckel 22 besteht.

Mit dem Ventilsitz 12 arbeitet ein Verschlußteil 23 zusammen, das von einem Schaft 24 getragen ist, der in einer zwischen das Gehäusehauptteil und das Federgehäuse 14 eingespannten Zwischenwand 26 geführt ist. Der Schaft 24 ist an eine Ventilspindel 28 angelenkt, die durch eine Ventilfeder 30 in die Schließstellung des Ventils vorgespannt ist. Die Ventilfeder 30 greift über einen Federsitz 32 an der Ventil spindel an und ist über einen weiteren Federsitz 34 und eine in axialer Richtung in der oberen Wand des Federgehäuses 14 verschraubbare Gewindehülse 35 einstellbar am Ventilgehäuse abgestützt.

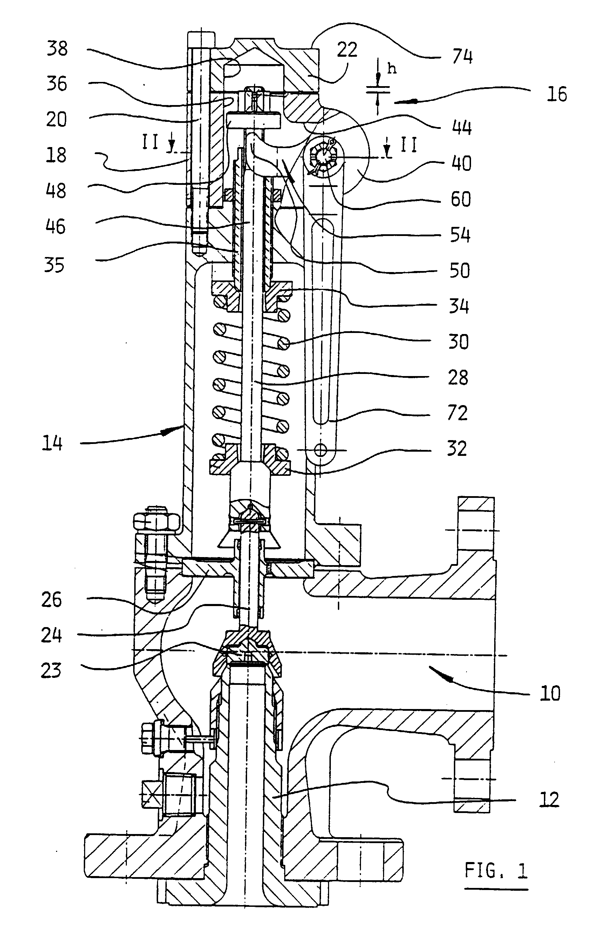

Der Gehäusegrundkörper 18 hat eine mittige Bohrung 36, die sich bündig in eine Sackbohrung 38 des Deckels 22 fortsetzt. Ferner ist in einem in Figur 1 rechts gelegenen Ansatz 40 des Gehäusegrundkörpers 18 eine transversale Wellenbohrung 42 vorgesehen, und diese steht über einen radialen Durchgang 38 mit der Bohrung 36 in Verbindung.

Ein Endabschnitt 46 der Ventilspindel 28 erstreckt sich durch die Gewindehülse 35 und die Bohrung 36 hindurch und liegt in der Schließstellung des Ventiles um eine kleine Strecke h über der oberen Stirnfläche des Gehäusegrundkörpers 18, wobei sie normalerweise in die Sackbohrung 38 eingreift, wie in Figur 1 gezeigt.

Auf dem mit Gewinde versehenen Endabschnitt 46 ist ein Betatigungsteller 48 verschraubbar, und an dessen Unterseite greifen die ballig ausgebildeten Enden von zwei Gabelarmen 50, 52 an, die zu einem insgesamt mit 54 bezeichneten Betätigungshebel gehören.

In seinem in Figur 1 rechts gelegenen Ende hat der Betätigungshebel 54 eine quadratischen Querschnitt aufweisende Antriebsöffnung 56, mit welcher er lose über einen Vierkantabschnitt 58 einer insgesamt mit 60 bezeichneten Betätigungswelle greift. Endabschnitte 62 der Betätigungswelle 60 sind über in die Enden der Wellenbohrung 42 eingeschraubte Lagerbuchsen 64 am Gehäusegrundkörper 18 gelagert, und zwischen den innenliegenden Stirnflächen und der am innenliegenden Ende der Endabschnitte 62 liegenden Schulter sind jeweils ein Dichtring 66 und eine Beilagscheibe 68 aus Metall angeordnet. Auf diese Weise ist die Betätigungswelle 60 leichtgängig, biegungsfrei und unter axialem Kraftausgleich am Gehäusegrundkörper 18 gelagert. Einer der Endabschnitte 62 trägt einen Sechskant 70, auf welchen ein Betätigungshebel 72 aufgesetzt ist.

Der Betätigungsteller 48 läuft in der Bohrung 36 unter einem Spiel, welches kleiner ist als die Dicke der Gabelarme 50, 52. Ferner ist der axiale Zwischenraum zwischen der oberen Stirnfläche des Betätigungstellers 48 und der Oberkante des Durchganges 44 kleiner als die Höhe des Betätigungshebels 54. Auf diese Weise ist insgesamt gewährleistet, daß der Betätigungshebel 54 dann, wenn der Gehäusegrundkörper 18 überhaupt auf das Federgehäuse 14 aufgeschraubt ist, mit Sicherheit unterhalb des Betätigungstellers 48 angeordnet ist, so daß er dessen Bewegung in Öffnungsrichtung nicht behindern kann. Die axiale Abmessung der Sackbohrung 38 ist so groß, daß das Ende der Ventilspindel 28 nicht beim Bewegen in die volle Offenstellung des Ventiles behindert wird.

Bei dem in der Zeichnung wiedergegebenen Sicherheitsventil kann man nun das Verschlußteil 22 für Test- und Prüfzwecke vorübergehend in seiner Schließstellung arretieren, indem man den Deckel 22 um 180° um eine horizontale Durchmesserlinie gedreht auf den Gehäusegrundkörper 18 auf schraubt, so daß die obere Stirnfläche des Deckels mit der oberen Stirnfläche der Ventilspindel 28 verspannt wird. Aus dieser Anordnung des Deckels ergibt sich dann ein Abstand zwischen der dann unteren Deckel-Stirnfläche und der oberen Stirnfläche des Gehäusegrundkörpers, der der Strecke h entspricht. Hieran kann man bei aufmerksamer Betrachtung die Blockierung des Verschlußteiles 22 erkennen. Um die Blokkierung augenfälliger zu machen, ist von der in Figur 1 obenliegenden Stirnfläche des Deckels 22 ein Randabschnitt 74 axial abgedreht, so daß man bei umgesetzten Deckel einen deutlich erkennbaren Spalt zwischen Deckel und Gehäusegrundkörper hat.

Zusätzlich zu einer solchen Markierungskontur kann man die beiden Stirnflächen des Deckels 22 auch unterschiedlich färben oder lackieren, z.B. die in Figur 1 oben liegende Deckelstirnfläche grün, die normalerweise untenliegende Stirnfläche rot.

## Patentansprüche

1. Ventil, insbesondere Sicherheitsventil, mit einem Gehäuse (10, 14), mit einem vom Gehäuse getragenen Ventilsitz (12), mit einem mit dem Ventilsitz (12) zusammenarbeitenden Verschlußteil (23), mit einer auf das Verschlußteil (23) arbeitenden Ventilspindel (28), mit einer die Ventilspindel (28) auf einer ihrer Endlagen zu vorspannenden Ventilfeder (30) und mit einer Betätigungseinrichtung, durch welche die Ventilspindel (28) entgegen der Kraft der Ventilfeder (30) in Richtung auf ihre zweite Endlage zu bewegbar ist und welche ein auf der Ventilspindel (28) angeordnetes Betätigungsteil (48), einen das Betätigungsteil (48) untergreifenden Betätigungshebel (54) sowie eine Schwenkhalterung für den Betätigungshebel (54) aufweist, dadurch gekennzeichnet, daß die Schwenkhalterung als geschlossenes Einrichtungsgehäuse (18, 22) ausgebildet ist, welches auf das Ende des Ventilgehäuses (10, 14) aufgesetzt ist und eine Kammer aufweist, die das Betätigungsteil (48), den Betätigungshebel (54) sowie den dieses tragenden Abschnitt der Ventilspindel (28) aufnimmt, und daß das Betätigungsteil (48) in Kammer (36, 38, 40) des Einrichtungsgehäuses (18, 22) unter einem radialen Spiel läuft, welches kleiner ist als die Dicke des Betätigungshebels (54).

2. Ventil nach Anspruch 1, dadurch gekennzeichnet, daß der Betätigungshebel (54) als symmetrische Gabel ausgebildet ist und daß die Enden seiner Gabelarme (50, 52) am Betätigungsteil (48) in einer gemeinsamen axialen Ebene angreifen.

3. Ventil nach Anspruch 2, dadurch gekennzeichnet, daß die Gabelarme (50, 52) eine Gewindehülse (35) symmetrisch umgreifen, die zum Einstellen der Vorspannung der Ventilfeder (36) dient und von der Ventilspindel (28) unter Spiel durchsetzt wird.

4. Ventil nach Anspruch 2 oder 3, dadurch gekennzeichnet, daß das Betätigungsteil (48) als vorzugsweise axial auf der Ventilspindel (28) verschraubbarer Betätigungsteller ausgebildet ist.

5. Ventil nach einem der Ansprüche 1-4, dadurch gekennzeichnet, daß der Betätigungshebel (54) unter Spiel lose auf einer Betätigungswelle sitzt, die im Einrichtungsgehäuse (18, 22) gelagert ist.

6. Ventil nach Anspruch 5, dadurch gekennzeichnet, daß die Betätigungswelle (60) mit zwei Endabschnitten (62) im Einrichtungsgehäuse (18, 22) gelagert ist.

7. Ventil nach Anspruch 6, dadurch gekennzeichnet, daß die Endabschnitte (62) der Betätigungswelle (60) beide aus dem Einrichtungsgehäuse (18, 22) nach außen herausgeführt sind.

8. Ventil nach einem der Ansprüche 5-7, dadurch gekennzeichnet, daß die Endabschnitte (62) der Betätigungswelle (60) durch im Kraftnebenschluß beanspruchte Dichtungen (66) gegen eine Wellenbohrung (42) des Einrichtungsgehäuses (18, 22) abgedichtet sind.

9. Ventil nach einem der Ansprüche 1-8, dadurch gekennzeichnet, daß das Einrichtungsgehäuse (18, 22) aus einem Gehäusegrundteil (18) und einem lösbar (20) an diesem befestigten Deckel (22) besteht, daß das Ende der Ventilspindel (28) in der ersten Endstellung der Ventilspindel über das Gehäusegrundteil (18) übersteht und daß der Dekkel (22) in einer seiner Stirnflächen mit einer Sackbohrung (38) versehen ist, welche den überstehenden Endabschnitt der Ventilspindel (28) bei aufgesetztem Deckel (22) vollständig aufnimmt und ein unbehindertes Bewegen der Ventilspindel in deren zweite Endstellung zuläßt.

10. Ventil nach einem der Ansprüche 1-8, dadurch gekennzeichnet, daß das Einrichtungsgehäuse (18, 22) aus einem Gehäusegrundteil (18) und einem lösbar (20) mit diesem verbundenen Deckel (22) besteht und daß der Deckel an einer seiner Stirnflächen mit einem Ansatz versehen ist, dessen axiale Abmessung größer ist als diejenige Strecke, um welche die Stirnfläche der Ventilspindel (28) in deren Endstellung hinter der Stirnfläche des Gehäusegrundteiles (18) liegt, welche Strecke wiederum größer ist als der volle Hub der Ventilspindel.

11. Ventil nach Anspruch 9 oder 10, gekennzeichnet durch eine Markierungskontur (74), die an einer der Stirnflächen des Deckels (22) angebracht ist.

## Claims

1. Valve, in particular a safety valve, having a housing (10, 14), having a valve seat (12) carried by the housing, having a closure part (23) cooperating with the valve seat (12), having a valve spindle (28) acting upon the closure part (23), having a valve spring (30) preloading the valve spindle (28) towards one of its end positions, and having an actuating device, by means of which the valve spindle (28) is movable counter to the action of the valve spring (30) in the direction of its second end position and which comprises an actuating part (48) disposed on the valve spindle (28), an actuating lever (54) engaging under the actuating part (48) as well as a swivel mounting for the actuating lever (54), characterized in that the swivel mounting takes the form of a closed device housing (18, 22), which is mounted onto the end of the valve housing (10, 14) and comprises a chamber, which receives the actuating part (48), the actuating lever (54) as well as the portion of the valve spindle (28) carrying the actuating part, and that the actuating part (48) moves in chamber (36, 38, 40) of the device housing (18, 22) with a radial clearance which is smaller than the thickness of the actuating lever (54).

2. Valve according to claim 1, characterized in that the actuating lever (54) takes the form of a symmetrical fork and that the ends of its fork arms (50, 52) act upon the actuating part (48) in a common axial plane.

3. Valve according to claim 2, characterized in that the fork arms (50, 52) symmetrically embrace a threaded sleeve (35), which is used to adjust the prestressing of the valve spring (36) and is penetrated with clearance by the valve spindle (28).

4. Valve according to claim 2 or 3, characterized in that the actuating part (48) takes the form of an actuating plate which is screwable preferably axially on the valve spindle (28).

5. Valve according to one of claims 1 - 4, characterized in that the actuating lever (54) is seated with clearance loosely on an actuating shaft, which is supported in the device housing (18, 22).

6. Valve according to claim 5, characterized in that the actuating shaft (60) is supported by two end portions (62) in the device housing (18, 22).

7. Valve according to claim 6, characterized in that the end portions (62) of the actuating shaft (60) are both led outwards from the device housing (18, 22).

8. Valve according to one of claims 5 - 7, characterized in that the end portions (62) of the actuating shaft (60) are sealed off from a shaft bore (42) of the device housing (18, 22) by means of seals (66), which are stressed so as to be friction-locked in parallel.

9. Valve according to one of claims 1 - 8, characterized in that the device housing (18, 22) comprises a housing basic part (18) and a cover (22) releasably (20) fastened thereon, that the end of the valve spindle (28) in the first end position of the valve spindle projects above the housing basic part (18) and that the cover (22) is provided in one of its end faces with a blind bore (38) which, when the cover (22) is fitted on, fully accommodates the projecting end portion of the valve spindle (28) and allows unimpeded movement of the valve spindle in the latter's second end position.

10. Valve according to one of claims 1 - 8, characterized in that the device housing (18, 22) comprises a housing basic part (18) and a cover (22) releasably (20) connected thereto and that the cover is provided at one of its end faces with a projection, the axial dimension of which is greater than the distance by which the end face of the valve spindle (28) in the latter's end position lies behind the end face of the housing basic part (18), which distance is in turn greater than the full stroke of the valve spindle.

11. Valve according to claim 9 or 10, characterized by a marking contour (74), which is provided at one of the end faces of the cover (22).

## Revendications

1. Soupape, en particulier soupape de sûreté, avec un corps (10, 14), avec un siège de soupape (12) porté par le corps, avec une partie obturateur (23), coopérant avec le siège de soupape (12), avec une broche de soupape (28), agissant sur la partie obturateur (23), avec un ressort de soupape (30) assurant une précontrainte de la broche de soupape (3) sur l'une de ses positions finales et avec un dispositif d'actionnement au moyen duquel la broche de soupape (28) est déplaçable à l'encontre de la force du ressort de soupape (30) dans la direction de sa deuxième position finale, et qui présente une partie actionnement (48), disposée sur la broche de soupape (28), un levier d'actionnement (54) saisissant par le dessous la partie actionnement (48), ainsi qu'une fixation à pivotement destinée au levier d'actionnement (54), caractérisée en ce que la fixation à pivotement est réalisée sous la forme d'un carter de dispositif (18, 22) fermé, qui est placé sur l'extrémité du corps de soupape (10, 14) et présente une chambre qui reçoit la partie actionnement (48), le levier d'actionnement (54), ainsi que la section, portant celle-ci, de la broche de soupape (28), et en ce que la partie d'actionnement (48) s'étend dans la chambre (36, 38, 40) du carter de dispositif (18, 22) avec un jeu radial, d'une valeur inférieure à l'épaisseur du levier d'actionnement (54).

2. Soupape selon la revendication 1, caractérisée en ce que le levier d'actionnement (54) est réalisé sous la forme d'une fourche symétrique et en ce que les extrémités de ses bras de fourche (50, 52) agissent sur la partie actionnement (48) dans un plan axial commun.

3. Soupape selon la revendication 2, caractérisée en ce que les bras de fourche (50, 52) entourent symétriquement une douille filetée (35) qui sert au réglage de la précontrainte du ressort de soupape (36) et est traversée avec du jeu par la broche de soupape (28).

4. Soupape selon la revendication 2 ou 3, caractérisée en ce que la partie actionnement (48) est réalisée sous la forme d'un plateau d'actionnement, vissable de préférence axialement, sur la broche de soupape (28).

5. Soupape selon l'une des revendications 1 à 4, caractérisée en ce que le levier d'actionnement (54) est monté avec du jeu, lâche, sur un arbre d'actionnement qui tourillonne dans le carter de dispositif (18, 22).

6. Soupape selon la revendication 5, caractérisée en ce que l'arbre d'actionnement (60) est monté à rotation dans le carter de dispositif (18, 22), à l'aide de deux sections d'extrémité (62).

7. Soupape selon la revendication 6, caractérisée en ce que les sections d'extrémité (62) de l'arbre d'actionnement (60) sont, les deux, guidées vers l'extérieur, hors du carter de dispositif (18, 22).

8. Soupape selon les revendications 5-7, caractérisée en ce que les sections d'extrémité (62) de l'arbre d'actionnement (60) sont isolées de façon étanche au moyen de joints d'étanchéité (66), sollicité par une liaison annexe faisant agir des forces, contre un perçage d'arbre (42) du carter de dispositif (18, 22).

9. Soupape selon l'une des revendications 1-8, caractérisée en ce que le carter de dispositif (18, 22) est constitué d'une partie de base (18) de carter et d'un couvercle (22), fixé de façon désolidarisable (20) sur celle-ci, en ce que l'extrémité de la broche de soupape (28), dans la première position finale de la broche de soupape, fait saillie sur la partie de base (18) du carter, et en ce que le couvercle (22), dans l'une de ses faces frontales, est pourvu d'un trou borne (38) qui loge complètement la section d'extrémité en saillie de la broche de soupape (28) lorsque le couvercle (22) est appliqué et admet un déplacement non entravé de la broche de soupape dans sa deuxième position finale.

10. Soupape selon l'une des revendications 1-8, caractérisé en ce que le carter de dispositif (18, 22) est constitué d'une partie base (18) de carter et d'un couvercle (22) relié à celle-ci de façon désolidarisable (20), et en ce que le couvercle est pourvu, sur ses faces frontales, d'un appendice dont la dimension axiale est supérieure à la distance à laquelle la face frontale de la broche de soupape (28) vient se placer dans sa position finale derrière la face frontale de la partie de base (18) du carter, cette distance étant à son tour supérieure à la totalité de la course de la broche de soupape.

11. Soupape selon la revendication 9 ou 10, caractérisé par un contour de marquage (74), appliqué sur l'une des faces frontales du couvercle (22).
